# EUROPÄISCHE PATENTANMELDUNG

(11) **EP 4 369 299 A1**
(43) Veröffentlichungstag der Anmeldung: **15.05.2024**
(21) Anmeldenummer: 23206389.1
(22) Anmeldetag: 27.10.2023
(51) Int. Cl.: G06T 7/80

(54) **ANORDNUNG ZUR KALIBRIERUNG EINES KAMERASYSTEMS, KALIBRIERKÖRPER UND VERFAHREN ZUR DURCHFÜHRUNG DER KALIBRIERUNG**

(30) Priorität: 08.11.2022 DE 102022129462
(71) Anmelder: Göpel electronic GmbH, 07745 Jena (DE)
(72) Erfinder: Rabich, Stephan, 07749 Jena (DE); Hacke, André, 07973 Greiz (DE); Felgentreu, Dennis, 99423 Weimar (DE); Richter, Romin, 07743 Jena (DE)
(74) Vertreter: Gleim Petri Patent- und Rechtsanwaltspartnerschaft mbB

(57) **Zusammenfassung**

Die Erfindung betrifft eine Anordnung zur Kalibrierung eines Kamerasystems (20) sowie einen Kalibrierkörper (10) und ein Verfahren zur Durchführung der Kalibrierung. Die Anordnung umfasst einen Kalibrierkörper (10), der mindestens eine erste Fläche (Fₘ) und mindestens eine zweite Fläche (Fₙ) aufweist, auf denen jeweils ein Muster (11) zur Ermittlung der Fokuslagen von Kameras (21, 22) des Kamerasystems (20) und eine Maßverkörperung (12) zur Ermittlung einer räumlichen Beziehung zwischen einer ersten Kamera (21) und mindestens einer zweiten Kamera (22) aufgebracht ist. Die Anordnung umfasst weiterhin ein Kamerasystem (20), das die erste Kamera (21), die als telezentrische Kamera ausgebildet ist, und die mindestens eine zweite Kamera (22) aufweist, wobei eine optische Achse (O₂) der mindestens einen zweiten Kamera (22) einen ersten Winkel (α) mit der optischen Achse (O₁) der ersten Kamera (21) einschließt, sowie eine Auswerte- und Speichereinheit (30), die dazu ausgebildet ist, die Fokuslagen der ersten Kamera (21) und der mindestens einen zweiten Kamera (22) auf Basis von mindestens einer Abbildung der ersten Kamera (21) und der mindestens einen zweiten Kamera (22) zu ermitteln und zu kalibrieren.

## Beschreibung

Die Erfindung betrifft eine Anordnung zur Kalibrierung eines Kamerasystems, einen Kalibrierkörper und ein Verfahren zur Durchführung der Kalibrierung des Kamerasystems.

Die Kalibrierung von Fokuslagen von mehreren Kameras bzw. Kamerasystemen spielt in vielen Prüf- und Messverfahren eine wesentliche Rolle für die Toleranzen, die geprüft werden können bzw. mit denen gemessen werden kann. In vielen Industriebereichen werden Prüf- und Kalibrieranordnungen auf Basis von Bildverarbeitung (maschinelles Sehen bzw. Machine Vision) für verschiedenartige Aufgaben eingesetzt. Bei der Verwendung solcher optischen Systeme ist es möglich, eine Qualitätssicherung mittels berührungsloser Verfahren durchzuführen. Das maschinelle Sehen bietet zudem die Möglichkeit unterschiedliche Aspekte der Qualitätssicherung, beispielsweise Lage- und Objekterkennungen, Vollständigkeitsprüfungen oder Oberflächeninspektionen, automatisch durchzuführen.

Machine-Vision-Systeme in Prüf- und Kalibrieranordnungen weisen in Abhängigkeit von der Anzahl an bildaufnehmenden Kameras und etwaiger Licht-Projektoren einen unterschiedlichen Grad an Komplexität auf. Auf kleinstem Raum kann eine hohe Anzahl von Komponenten, wie Kameras, Objektive und Projektoren, untergebracht sein, so dass nach vollständiger Montage und Inbetriebnahme der Zugang eingeschränkt möglich sein kann. Machine-Vision-Systeme erfordern aber, dass die Komponenten während einer Erstinstallation und wiederkehrenden Wartungsarbeiten zueinander und in Bezug auf die Prüfebene justiert und kalibriert werden können. Zur Sicherstellung einer höchstmöglichen Präzision und einer effizienten Ausführung soll dieser Vorgang möglichst automatisch ablaufen. Herstellungsbedingte und durch Umwelteinflüsse hervorgerufene, abweichende optische Eigenschaften der optischen Komponenten der Prüf- und Kalibrieranordnungen müssen zur automatischen Kalibrierung der Lage und Ausrichtung von projizierenden und bildaufnehmenden Komponenten ausgeglichen werden.

Aus dem Stand der Technik sind verschiedene Anordnungen bzw. Systeme und Verfahren zur Prüfung und Kalibrierung von Machine-Vision-Systemen bekannt.

In der DE 10 2013 014 475 A1 ist eine optische Messvorrichtung sowie ein Verfahren zum Kalibrieren der optischen Messvorrichtung offenbart. Die optische Messvorrichtung umfasst mindestens eine Kamera zum Erfassen zwei- oder dreidimensionaler Strukturen eines Messobjekts, das Messobjekt mit einer Anzeigeeinrichtung, die aus einem festen Raster steuerbarer Elemente besteht, und eine Auswerte- und Steuereinrichtung. Das Messobjekt weist eine Oberfläche mit mehreren Mustern auf, unter anderem verschiedene Kalibriermarken und die Anzeigeeinrichtung. Die Anzeigeeinrichtung weist ein Display auf, auf dem Kalibriermuster zur Kalibrierung einer oder mehrerer Kameras dargestellt werden können. Die Anordnung der Kameras ist nicht näher beschrieben und die Vorrichtung ist nicht dazu ausgelegt, die Fokuslage der mindestens einen Kamera zu bestimmen.

Die WO 2007/036457 A2 offenbart ein Verfahren und ein System zur Kalibrierung einer Kamera in einem Arbeitsraum einer Maschine. Für das beschriebene Verfahren wird ein Kalibrierungsobjekt innerhalb des Arbeitsraums in verschiedenen Positionen mit der Kamera abgebildet bzw. aufgenommen. Anschließend werden Parameter des Kalibrierungsobjekts ermittelt und den Aufnahmen der Kamera zugeordnet. Aus den aufgenommenen Parametern des Kalibrierungsobjekts werden in der Folge Parameter der Kamera ermittelt. Um die Parameter der Kamera zu ermitteln, wird die Position des Kalibrierungsobjekts mittels eines Messsystems der Maschine gemessen. Zudem muss die Position der Kamera relativ zu Messsystem oder dem Kalibrierungsobjekt gemessen werden oder bekannt sein. Die Genauigkeit der Kalibrierung der Kamera ist somit von den Toleranzen bei der Ermittlung der Position von Kalibrierungsobjekt und Kamera abhängig. Dadurch entsteht für die Kalibrierung der Kamera eine zusätzliche Fehlerquelle. Das offenbarte System besteht aus der Kamera, dem Kalibrierungsobjekt und dem Messsystem der Maschine. Das Kalibrierungsobjekt selbst ist nicht näher beschrieben.

Ein weiteres Verfahren und ein System zum Durchführen einer automatischen Kamerakalibrierung für ein Abtastsystem ist in der DE 10 2020 106 965 A1 beschrieben. Mit dem Verfahren sollen zwei oder mehr Kameras kalibriert werden und ein 3D-Modell eines Objekts erzeugt werden können. Dazu wird ein Polyeder mit einer Vielzahl von Flächen mit Kalibriermustern von den Kameras aus unterschiedlichen Richtungen abgebildet und eine Transformationsfunktion zum Beschreiben einer räumlichen Beziehung zwischen der ersten Kamera und der zweiten Kamera bestimmt. Das in der DE 10 2020 106 965 A1 beschriebene System umfasst eine Schnittstelle zum Kommunizieren mit einer ersten Kamera, einer zweiten Kamera und einem Aktuator, mit dem eine durchsichtige Plattform, auf der sich der Polyeder befindet, gedreht werden kann. Das System besitzt weiterhin eine Steuerschaltung, die zur Kalibrierung der Kameras ausgebildet ist. Das offenbarte Verfahren eignet sich zwar dazu, zwei oder mehr Kameras relativ zueinander zu kalibrieren, zum Ermitteln der Fokuslagen von mehreren Kameras mit unterschiedlichen Abbildungseigenschaften ist es jedoch nicht geeignet, da jede Fläche nur ein Muster mit einem definierten Linienabstand aufweist. Zwar ist ein Ermitteln der Fokuslagen der Kameras möglich, jedoch ist eine Zuordnung zu einem gemeinsamen Koordinatensystem nicht realisierbar.

Die DE 20 2018 105 039 U1 offenbart einen Kalibrierkörper und ein System zur Kalibrierung einer Kamera. Der Kalibrierkörper ist plattenförmig oder als Quader ausgebildet und weist ein optoelektronisch lesbares Rastermuster auf, das als Punktmuster ausgebildet ist. Das System umfasst den Kalibrierkörper, eine oder zwei Kameras sowie eine Ausleseeinrichtung. Die Kamera bzw. die Kameras sind dazu ausgebildet, das Rastermuster optisch abzubilden. Die Ausleseeinrichtung ist zur Kalibrierung und/oder zur Positions- und Ausrichtungsbestimmung der Kamera bzw. der Kameras ausgebildet. Zwar ist ein Ermitteln der Fokuslagen der Kameras möglich, jedoch ist eine Zuordnung zu einem übergeordneten Koordinatensystem nicht möglich. Zudem sind die Kameras alle unterschiedlich ausgerichtet und nebeneinander angeordnet, wodurch eine Kalibrierung der Kameras zueinander sehr aufwändig ist. Die Abbildungseigenschaften der Kameras sind nicht näher beschrieben.

Es ist die Aufgabe der Erfindung, eine neue Möglichkeit zur Kalibrierung eines Kamerasystems bereitzustellen, mit der eine Kalibrierung von Fokuslagen der Kameras des Kamerasystems automatisch durchgeführt werden kann. Ferner soll ein Kalibrierkörper sowie ein Verfahren zum Durchführen der Kalibrierung der Fokuslagen der Kameras des Kamerasystems bereitgestellt werden.

Die Aufgabe wird für eine Anordnung zur Kalibrierung eines Kamerasystems, umfassend einen Kalibrierkörper, der ein achsensymmetrischer Polyeder mit einer ebenen Grundfläche ist, dessen Mittelpunkt sich auf einer optischen Achse einer ersten Kamera befindet und bei dem auf mindestens einer Fläche ein Muster aufgebracht ist, das mindestens eine Liniengruppe zur Ermittlung der Fokuslagen von Kameras des Kamerasystems aufweist, wobei das Kamerasystem die erste Kamera, die entlang der optischen Achse der ersten Kamera ausgerichtet und dazu ausgebildet ist, mindestens eine erste Fläche des Kalibrierkörpers abzubilden, mindestens eine zweite Kamera, wobei jede zweite Kamera einer zweiten Fläche zugeordnet und dazu ausgebildet ist, die ihr zugeordnete zweite Fläche des Kalibrierkörpers abzubilden, und eine Auswerte- und Speichereinheit, die mit der ersten Kamera und der mindestens einen zweiten Kamera verbunden und dazu ausgebildet ist, die Fokuslagen der Kameras des Kamerasystems auf Basis von mindestens einer Abbildung je Kamera zu ermitteln und zu kalibrieren, aufweist, dadurch gelöst, dass die erste Kamera und die mindestens eine zweite Kamera auf denselben Punkt der optischen Achse der ersten Kamera ausgerichtet sind, die erste Kamera als telezentrische Kamera ausgebildet ist, eine optische Achse der mindestens einen zweiten Kamera einen ersten Winkel mit der optischen Achse der ersten Kamera einschließt und auf jeder ersten Fläche und jeder zweiten Fläche das Muster und eine Maßverkörperung aufgebracht sind, wobei die Maßverkörperung zur Ermittlung einer räumlichen Beziehung zwischen der ersten Kamera und der mindestens einen zweiten Kamera dient und durch die Maßverkörperung Fokuslagen und Fokusqualitätsfunktionen der ersten Kamera und der mindestens einen zweiten Kamera in einem übergeordneten gemeinsamen Koordinatensystem einander zuordenbar sind.

Dieselbe Anordnung kann ebenso als Mess- und/oder Prüfanordnung verwendet werden, indem der Kalibrierkörper entfernt und ein zu vermessendes und/oder ein zu prüfendes Objekt an der Position des Kalibrierkörpers angeordnet wird. Zu prüfende Objekte können beispielsweise ein- oder beidseitig bestückte Leiterplatten, Leiterkarten, Platinen usw. sein.

Durch die Maßverkörperung ist es möglich, die Fokuslagen und die Fokusqualitätsfunktionen der ersten Kamera und der mindestens einen zweiten Kamera in einem übergeordneten gemeinsamen Koordinatensystem einander zuzuordnen. Die Fokuslage der ersten Kamera und jeder zweiten Kamera ist in der Regel bekannt, jedoch nur in einem Koordinatensystem der jeweiligen Kamera. Die Fokusqualitätsfunktion der ersten Kamera und jeder zweiten Kamera kann mittels der Auswerte- und Speichereinheit aus Abbildungen der ersten Kamera und jeder zweiten Kamera ermittelt werden. Wenn die Fokusqualitätsfunktion mittels der Auswerte- und Speichereinheit aus einer Abbildung, die mit der Kamera aufgenommen wurde, ermittelt wird, ist sie jedoch nur in dem Koordinatensystem der jeweiligen Kamera bekannt. Durch die Maßverkörperung können die Fokuslagen und die Fokusqualitätsfunktionen der ersten Kamera und der mindestens einen zweiten Kamera mittels der Auswerte- und Speichereinheit in ein übergeordnetes gemeinsames Koordinatensystem transformiert und einander zugeordnet werden.

Besonders vorteilhaft ist die erste Kamera dazu ausgelegt alle zweiten Flächen abzubilden. In dem Fall ist jede zweite Fläche auch eine erste Fläche.

Eine Fläche des Kalibrierkörpers kann gleichzeitig eine erste Fläche, die von der ersten Kamera abgebildet werden kann und eine zweite Fläche, die von der zweiten Kamera abgebildet werden kann, sein.

Besonders vorteilhaft sind die erste Kamera und die mindestens eine zweite Kamera in einem selben Halbraum über dem Kalibrierkörper angeordnet und der erste Winkel, den die optische Achse der mindestens einen zweiten Kamera mit der optischen Achse der ersten Kamera einschließt, beträgt mehr als 0° und weniger als 90°, vorzugsweise liegt er zwischen 20° und 80°, insbesondere zwischen 30° und 60° und besonders bevorzugt zwischen 40° und 50°. Die mindestens eine zweite Kamera ist vorteilhaft verfahrbar entlang ihrer optischen Achse.

Der Kalibrierkörper kann auch gegenüber einer Objektebene, in der er sich befindet und in die ein zu prüfendes oder zu vermessendes Objekt eingebracht werden kann, verdrehbar sein. Ein Verdrehen des Kalibrierkörpers kann mittels eines mit dem Kalibrierkörper gekoppelten Aktuators erfolgen.

Die Verbindung der Auswerte- und Speichereinheit mit der ersten Kamera und der mindestens einen zweiten Kamera kann physisch, beispielsweise durch Kabel, oder nicht physisch, beispielsweise über ein kabelloses Netzwerk, erfolgen. Es ist erfindungswesentlich, dass die Auswerte- und Speichereinheit Abbildungen der ersten Kamera und der mindestens einen zweiten Kamera empfangen kann.

Vorteilhaft ist die Maßverkörperung fest auf jeder ersten Fläche und jeder zweiten Fläche aufgebracht und das Muster ist fest auf jeder ersten Fläche und jeder zweiten Fläche aufgebracht oder durch Belichtung mittels Projektoren auf jeder ersten Fläche und jeder zweiten Fläche aufgebracht. Vorteilhaft ist jedem Projektor eine Fläche zugeordnet und eine optische Achse jedes Projektors ist orthogonal zu der jeweils zugeordneten Fläche. Die optische Achse jedes Projektors kann aber auch von der Orthogonalstellung zur zugeordneten Fläche abweichen. Es ist von Vorteil, wenn die optische Achse jedes Projektors einen Winkel zwischen 70° und 110° mit der ihm zugeordneten Fläche einschließt. Das Muster kann auf jeder ersten Fläche fest aufgebracht sein und auf jeder zweiten Fläche durch Belichtung mittels eines Projektors aufgebracht sein oder umgekehrt.

Die Projektoren können mittels des Kalibrierkörpers ebenfalls ausgerichtet werden. Der Kalibrierkörper bzw. die Maßverkörperung sind dann entsprechend dazu ausgelegt, das projizierte Muster in dem übergeordneten, gemeinsamen Koordinatensystem zuzuordnen und auszurichten.

Der Kalibrierkörper kann die Form einer Platte aufweisen. Alternativ kann der Kalibrierkörper die Form einer n-seitigen Pyramide oder eines n-seitigen Pyramidenstumpfs aufweisen und jede erste Fläche und/oder jede zweite Fläche ist eine Seitenfläche der Pyramide oder des Pyramidenstumpfs.

Die mindestens eine zweite Kamera kann als entozentrische Kamera ausgebildet sein.

Der Kalibrierkörper befindet sich vorteilhaft in einer Objektebene, in der ein zu prüfendes und/oder zu vermessendes Objekt platziert werden kann. Der Kalibrierkörper kann um die optische Achse der ersten Kamera um einen zweiten Winkel verdrehbar sein. Außerdem kann ein Aktuator, der mit dem Kalibrierkörper gekoppelt ist, vorhanden sein, um den Kalibrierkörper um einen zweiten Winkel um die optische Achse der ersten Kamera zu verdrehen.

Vorteilhaft ist der Kalibrierkörper auf einem Messtisch angeordnet und die optische Achse der ersten Kamera ist senkrecht zu einer Tischplatte des Messtischs ausgerichtet.

Die Aufgabe wird weiterhin durch einen Kalibrierkörper zur Kalibrierung eines Kamerasystems gelöst, wobei der Kalibrierkörper ein achsensymmetrischer Polyeder mit einer ebenen Grundfläche ist, bei dem auf mindestens einer Fläche ein Muster, das mindestens eine Liniengruppe zur Ermittlung der Fokuslagen von Kameras des Kamerasystems aufweist, und eine Maßverkörperung zur Ermittlung einer räumlichen Beziehung zwischen der ersten Kamera und der mindestens einen zweiten Kamera und zur Zuordnung von Fokuslagen und Fokusqualitätsfunktionen der ersten Kamera und der mindestens einen zweiten Kamera in einem übergeordneten gemeinsamen Koordinatensystem, aufgebracht sind.

Das Muster kann genau eine Liniengruppe aufweisen und die Liniengruppe weist ungleiche Linienabstände auf. Alternativ weist das Muster mindestens zwei Liniengruppen auf und jede der Liniengruppen weist jeweils einen gleichen Linienabstand auf, der sich von dem Linienabstand der anderen Liniengruppen unterscheidet.

Es ist von Vorteil, wenn der Kalibrierkörper die Form einer n-seitigen Pyramide oder eines n-seitigen Pyramidenstumpfs aufweist.

Die Form des Kalibrierkörpers, insbesondere der Neigungswinkel der Seitenflächen zur Grundfläche bei einer Ausführung des Kalibrierkörpers als Pyramide oder Pyramidenstumpf, kann mit der Anordnung der zweiten Kameras, insbesondere dem ersten Winkel, den eine optische Achse der mindestens einen zweiten Kamera mit der optischen Achse der ersten Kamera einschließt, korreliert sein.

Die Aufgabe wird schließlich durch ein Verfahren zur Kalibrierung eines Kamerasystems gelöst, wobei das Verfahren das Aufnehmen mindestens einer Abbildung von mindestens einer ersten Fläche eines Kalibrierkörpers mit einer ersten Kamera, das Aufnehmen mindestens einer Abbildung von mindestens einer zweiten Fläche des Kalibrierkörpers mittels mindestens einer zweiten Kamera, das Bestimmen eines interessierenden Bereichs für mindestens eine Abbildung der mindestens einen ersten Fläche und für mindestens eine Abbildung jeder zweiten Fläche, wobei jeder interessierende Bereich mindestens ein Muster und mindestens eine Maßverkörperung enthält, mittels einer Auswerte- und Speichereinheit, das Ermitteln einer Fokusqualitätsfunktion mit der Auswerte- und Speichereinheit für jeweils die erste Kamera und die mindestens eine zweite Kamera, wobei die Fokusqualitätsfunktion aus Mittelwerten und Standardabweichungen von Grauwerten aus dem jeweiligen interessierenden Bereich ermittelt wird, das Ermitteln eines Extremwertes der Fokusqualitätsfunktionen für jeweils die erste Kamera und die mindestens eine zweite Kamera mit der Auswerte- und Speichereinheit und das Kalibrieren der ersten Kamera und der mindestens einen zweiten Kamera, wobei ein Bezug zwischen den Fokusqualitätsfunktionen und den Fokuslagen der ersten Kamera und der mindestens einen zweiten Kamera jeweils durch eine Maßverkörperung hergestellt wird, umfasst.

Die Fokusqualitätsfunktion beschreibt die Qualität eines Fokus einer Kamera in Abhängigkeit von einer Position der Kamera.

Das erfindungsgemäße Verfahren dient der automatischen Kalibrierung von Lage und Ausrichtung der Projektoren und Kameras eines Kamerasystems. Mit dem Verfahren können unter anderem herstellungsbedingte und/oder durch Umwelteinflüsse hervorgerufene abweichende optische Eigenschaften jeder optischen Komponente des Kamerasystems ausgeglichen werden. Vorteilhaft werden die erste Kamera und die mindestens eine zweite Kamera so kalibriert, dass sie in einem Maximum ihrer Fokusqualitätsfunktion entlang ihrer optischen Achse angeordnet sind.

Die Kalibrierung der Projektoren kann vorteilhaft vor der Kalibrierung der Kameras vorgenommen werden. Die Kalibrierung der Projektoren umfasst dabei insbesondere die Positionierung und Ausrichtung des von ihnen projizierten Musters.

Der interessierende Bereich kann mehrere Muster und mehrere Maßverkörperungen enthalten. Insbesondere der interessierende Bereich, der für die mindestens eine Abbildung der mindestens einen ersten Fläche ermittelt wird, kann mehrere Muster und mehrere Maßverkörperungen enthalten.

Vorteilhaft ist der interessierende Bereich in mehrere Teilbereiche unterteilt und für jeden der Teilbereiche wird eine Fokusqualitätsfunktion für jeweils die erste Kamera und die mindestens eine zweite Kamera ermittelt.

Jede ermittelte Fokusqualitätsfunktion kann mittels entsprechender Filter korrigiert werden, um Störungen, wie beispielsweise Abbildungs- oder Abtastungsfehler, zu entfernen. Die Filter können sowohl optische Filter sein, die in die Strahlengänge der Kameras des Kamerasystems eingebracht werden, als auch softwareimplementierte Filter sein, die nach der Aufnahme auf die Abbildungen angewendet werden.

Es ist von Vorteil, wenn mit der ersten Kamera und/oder der mindestens einen zweiten Kamera jeweils mehrere Abbildungen aufgenommen werden und der Kalibrierkörper nach jeder Aufnahme um einen zweiten Winkel um die optische Achse der ersten Kamera, vorzugsweise mittels eines Aktuators, verdreht wird.

Durch die Erfindung wird eine Kalibrierung eines Kamerasystems bereitgestellt, mit der eine Kalibrierung der Fokuslagen der Kameras des Kamerasystems sowie die Zuordnung zu einem übergeordneten Koordinatensystem automatisch durchgeführt werden kann.

Ferner wird ein Kalibrierkörper und ein Verfahren zum Durchführen der Kalibrierung der Fokuslagen der Kameras des Kamerasystems bereitgestellt.

Die Erfindung soll nachfolgend durch Ausführungsbeispiele anhand von Zeichnungen näher beschrieben werden. Hierzu zeigen:
- Fig. 1A: eine Seitenansicht einer ersten Ausführung der Anordnung von einem Kamerasystem und einem Kalibrierkörper,
- Fig. 1B: eine Seitenansicht einer zweiten Ausführung der Anordnung von Kamerasystem und Kalibrierkörper,
- Fig. 2A: eine Draufsicht auf eine erste Ausführung des Kalibrierkörpers als Platte,
- Fig. 2B: eine Ansicht einer zweiten Ausführung des Kalibrierkörpers als vierseitige Pyramide,
- Fig. 2C: eine Ansicht einer dritten Ausführung des Kalibrierkörpers als sechsseitiger Pyramidenstumpf,
- Fig. 2D: eine Ansicht einer vierten Ausführung des Kalibrierkörpers als achtseitiger Pyramidenstumpf,
- Fig. 3A: eine Draufsicht auf eine erste Ausführung einer ersten Fläche des Kalibrierkörpers,
- Fig. 3B: eine Draufsicht auf eine zweite Ausführung der ersten Fläche des Kalibrierkörpers, und
- Fig. 4: eine Ansicht einer dritten Ausführung der Anordnung von Kamerasystem und Kalibrierkörper.

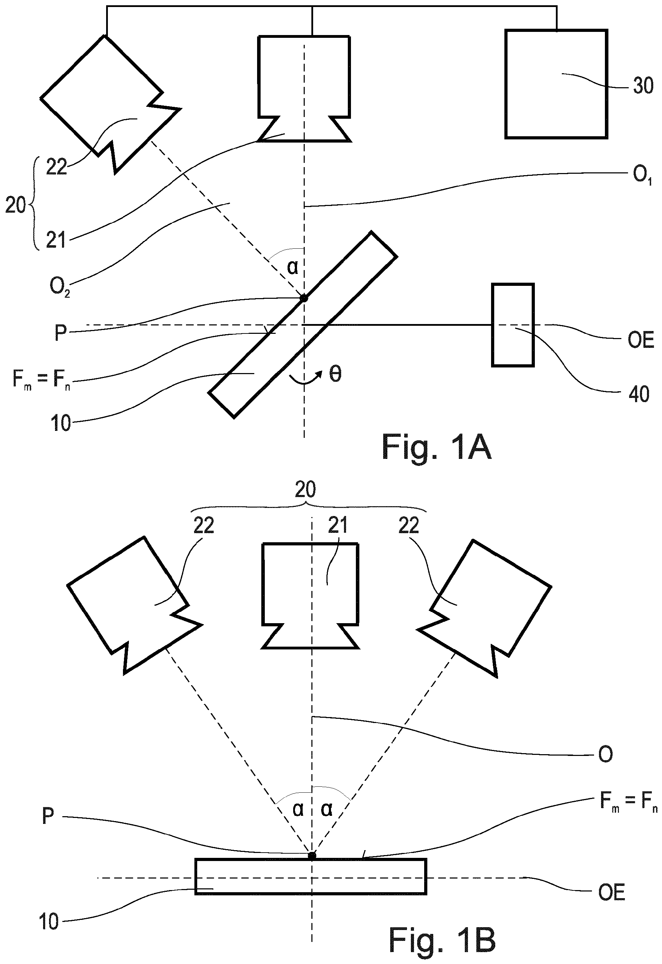

Eine erste Ausführung einer Anordnung von einem Kamerasystem 20 und einem Kalibrierkörper 10 ist in **Fig. 1A** dargestellt. Das Kamerasystem 20 umfasst eine erste Kamera 21, eine zweite Kamera 22 und eine Auswerte- und Speichereinheit 30, die mit der ersten Kamera 21 und der zweiten Kamera 22 verbunden ist. Die erste Kamera 21 ist entlang einer optischen Achse O₁ der ersten Kamera 21 auf einen Punkt P ausgerichtet, als telezentrische Kamera und dazu ausgebildet, eine erste Fläche Fₘ des Kalibrierkörpers 10 abzubilden. Die optische Achse O₂ der zweiten Kamera 22 schließt einen ersten Winkel α mit der optischen Achse O₁ der ersten Kamera 21 ein und ist ebenfalls auf den Punkt P ausgerichtet. Die zweite Kamera 22 ist der zweiten Fläche Fₙ zugeordnet und dazu ausgebildet die zweite Fläche Fₙ abzubilden. Die Indizes m und n stehen jeweils für eine Menge, die beliebige natürliche Zahlen enthält. Die Mengen können sich überlappen oder gleich sein. Die zweite Kamera 22 ist vorteilhaft als entozentrische Kamera ausgebildet. In der in Fig. 1A gezeigten Ausführung ist die erste Fläche Fₘ gleich der zweiten Fläche Fₙ. Auf der ersten Fläche Fₘ bzw. der zweiten Fläche Fₙ sind ein Muster 11 und eine Maßverkörperung 12 aufgebracht. Die Maßverkörperung 12 dient zur Ermittlung einer räumlichen Beziehung zwischen der ersten Kamera 21 und der zweiten Kamera 22 und durch die Maßverkörperung 12 können die Fokuslage und die Fokusqualitätsfunktion der ersten Kamera 21 und der zweiten Kamera 22 in einem übergeordneten Koordinatensystem einander zugeordnet werden. Der Kalibrierkörper 10 weist die Form einer flachen Platte auf, deren Mittelpunkt sich auf der optischen Achse O₁ der ersten Kamera 21 befindet. Der Kalibrierkörper 10 ist mit einem Aktuator 40 verbunden, der dazu ausgelegt ist, den Kalibrierkörper 10 um einen zweiten Winkel θ um die optische Achse der ersten Kamera O₁ verdrehen. Das Verdrehen des Kalibrierkörpers 10 um die optische Achse der ersten Kamera O₁ ist durch einen Pfeil angedeutet. In Fig. 1A ist auch die Objektebene OE, in der sich der Kalibrierkörper 10 befindet und in die ein zu prüfendes oder zu vermessendes Objekt eingebracht werden kann, dargestellt. Der Kalibrierkörper 10 ist gegenüber der Objektebene OE mittels des Aktuators 40 verdrehbar.

Die Auswerte- und Speichereinheit 30 ist mit der ersten Kamera 21 und der zweiten Kamera 22 verbunden. Die Verbindung ist durch Striche angedeutet. Die Verbindung muss jedoch nicht physisch erfolgen. Es genügt, wenn die Auswerte- und Speichereinheit Abbildungen der ersten Kamera 21 und der zweiten Kamera 22 empfangen kann. Die Auswerte- und Speichereinheit 30 ist dazu ausgebildet, die Fokuslagen der ersten Kamera 21 und der zweiten Kamera 22 auf Basis von mindestens einer Abbildung der ersten Kamera 21 und zweiten Kamera 22 zu ermitteln und zu kalibrieren.

**Fig. 1B** zeigt eine zweite Ausführung der Anordnung von Kamerasystem 20 und Kalibrierkörper 10. Das Kamerasystem 20 umfasst eine erste Kamera 21 und zwei zweite Kameras 22. Die mit der ersten Kamera 21 und den zweiten Kameras 22 verbundene Auswerte- und Speichereinheit 30 ist nicht dargestellt. Die erste Kamera 21 ist entlang einer optischen Achse O₁ der ersten Kamera 21 auf einen Punkt P ausgerichtet, als telezentrische Kamera und dazu ausgebildet, eine erste Fläche Fₘ des Kalibrierkörpers 10 abzubilden. Die optischen Achsen O₂ der zweiten Kameras 22 schließen jeweils einen ersten Winkel α mit der optischen Achse O₁ der ersten Kamera 21 ein und sind ebenfalls auf den Punkt P ausgerichtet. Die zweiten Kameras 22 sind dazu ausgebildet eine zweite Fläche Fₙ des Kalibrierkörpers 10 abzubilden und die zweiten Kameras 22 sind vorteilhaft als entozentrische Kameras ausgebildet. Bei der dargestellten Ausführung sind einer zweiten Fläche Fₙ zwei zweite Kameras 22 zugeordnet. In der in Fig. 1A gezeigten Ausführung ist die erste Fläche Fₘ gleich der zweiten Fläche Fₙ. Auf der ersten Fläche Fₘ bzw. der zweiten Fläche Fₙ sind ein Muster 11 und eine Maßverkörperung 12 aufgebracht. Die Maßverkörperung 12 dient zur Ermittlung einer räumlichen Beziehung zwischen der ersten Kamera 21 und der zweiten Kameras 22 und durch die Maßverkörperung 12 können die Fokuslage und die Fokusqualitätsfunktion der ersten Kamera 21 und der zweiten Kameras 22 in einem übergeordneten Koordinatensystem einander zugeordnet werden. Der Kalibrierkörper 10 weist die Form einer flachen Platte auf, deren Mittelpunkt sich auf der optischen Achse der ersten Kamera O₁ befindet. In Fig. 1B ist auch die Objektebene OE, in der sich der Kalibrierkörper 10 befindet und in die ein zu prüfendes oder zu vermessendes Objekt eingebracht werden kann, dargestellt.

Die Auswerte- und Speichereinheit 30 ist mit der ersten Kamera 21 und den zweiten Kameras 22 verbunden (nicht dargestellt). Die Auswerte- und Speichereinheit 30 ist dazu ausgebildet, die Fokuslagen der ersten Kamera 21 und der zweiten Kameras 22 auf Basis von mindestens einer Abbildung der ersten Kamera 21 und zweiten Kameras 22 zu ermitteln und zu kalibrieren.

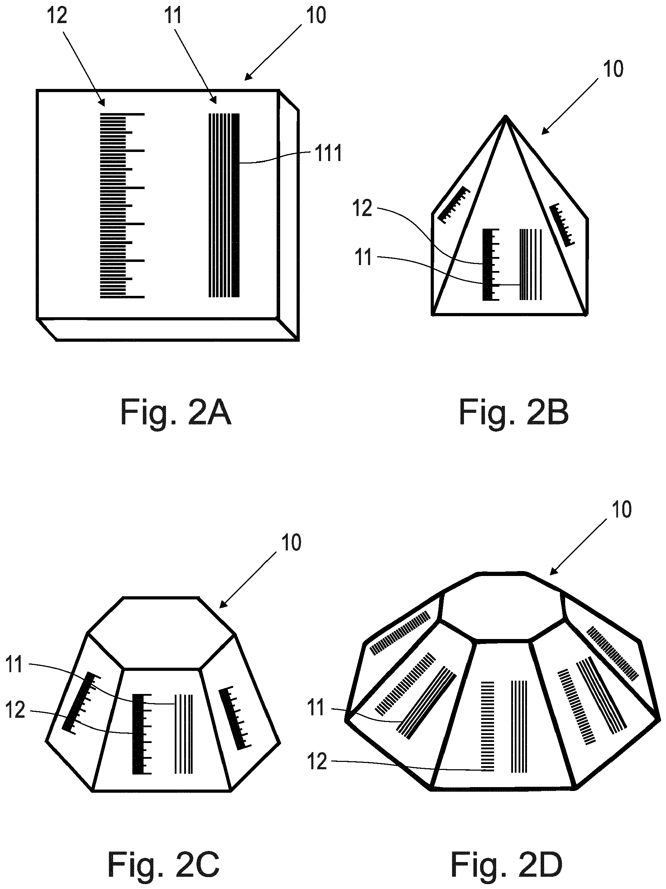

Die Fig. 2A-D zeigen unterschiedliche Ausführungen des Kalibrierkörpers 10. Der Kalibrierkörper 10 dient zur Kalibrierung des Kamerasystems 20 und kann, wie in Fig. 2A dargestellt, als Platte ausgeführt sein. Das ist insbesondere dann vorteilhaft, wenn der erste Winkel α, den die optische Achse O₂ der mindestens einen zweiten Kamera 22 mit der optischen Achse O₁ der ersten Kamera 21 einschließt, kleiner als 60° ist. Alternativ kann der Kalibrierkörper 10 die Form einer Pyramide, wie in Fig. 2B gezeigt, oder eines Pyramidenstumpfs, wie in Fig. 2C und Fig. 2D gezeigt, aufweisen. Die Form des Kalibrierkörpers 10, insbesondere der Neigungswinkel, den Seitenflächen und eine Grundfläche bei einer Ausführung als Pyramidenstumpf einschließen, kann von der Anordnung der zweiten Kameras 22, insbesondere dem ersten Winkel α, den die optische Achse O₂ der mindestens einen zweiten Kamera 22 mit der optischen Achse O₁ der ersten Kamera 21 einschließt, korreliert sein.

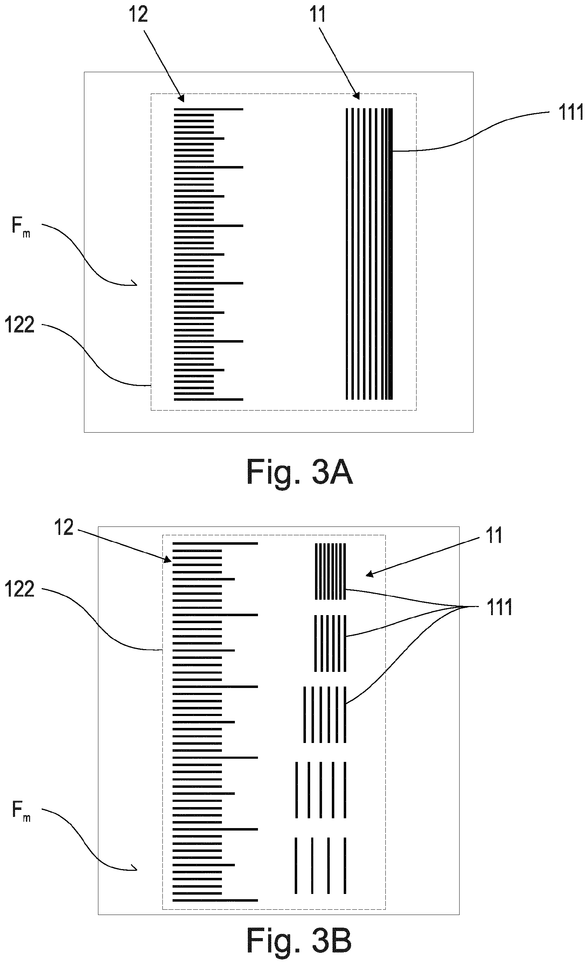

Ein Muster 11 ist auf mindestens einer Fläche des Kalibrierkörpers 10 zur Ermittlung der Fokuslagen von der ersten Kamera 21 und der mindestens einen zweiten Kamera 22 des Kamerasystems 20 aufgebracht. Das Muster 11 kann, wie in den Fig. 2A bis 2D gezeigt, nur eine Liniengruppe 111 aufweisen, wobei die Liniengruppe 111 ungleiche Linienabstände aufweist. Alternativ kann das Muster 11 mehrere Liniengruppen 111 aufweisen und jede der Liniengruppen 111 weist jeweils einen gleichen Linienabstand auf, der sich von dem Linienabstand der anderen Liniengruppen 111 unterscheidet, wie in Fig. 3B gezeigt.

Die Maßverkörperung 12 dient zur Ermittlung einer räumlichen Beziehung zwischen der ersten Kamera 21 und der mindestens einen zweiten Kamera 22 und zur Zuordnung der Fokuslagen und Fokusqualitätsfunktionen der ersten Kamera 21 und der mindestens einen zweiten Kamera 22 in einem übergeordneten gemeinsamen Koordinatensystem.

Eine erste Ausführung einer ersten Fläche Fₘ ist in **Fig. 3A** gezeigt. Auf der ersten Fläche Fₘ ist das Muster 11 und die Maßverkörperung 12 aufgebracht. Das Muster 11 weist nur eine Liniengruppe 111 auf, wobei die Liniengruppe 111 ungleiche Linienabstände aufweist. Die Liniengruppe 111 weist ungleiche Linienabstände auf, damit erste Kameras 21 unterschiedlicher Kamerasysteme 20 und zweite Kameras 22 mit unterschiedlichem Auflösungsvermögen kalibriert werden können. Die Maßverkörperung 12 weist Linien mit einem konstanten Linienabstand auf, wobei der Linienabstand für erste Kameras 21 unterschiedlicher Kamerasysteme 20 und zweite Kameras 22 mit unterschiedlichem Auflösungsvermögen geeignet sein soll. Auch der interessierende Bereich 122 (Englisch: Region of Interest) ist in Fig. 3A dargestellt. Der interessierende Bereich 122 umfasst das Muster 11 und die Maßverkörperung 12. Die erste Fläche Fₘ, die von der ersten Kamera 21 abgebildet werden kann, kann gleichzeitig die zweite Fläche Fₙ sein, die von der mindestens einen zweiten Kamera 22 abgebildet werden.

Eine zweite Ausführung einer ersten Fläche Fₘ wird durch **Fig. 3B** dargestellt. Auf der ersten Fläche Fₘ ist das Muster 11 und die Maßverkörperung 12 aufgebracht. Das Muster 11 weist mehrere Liniengruppen 111 auf, wobei jede der Liniengruppen 111 jeweils einen gleichen Linienabstand aufweist, der sich von dem Linienabstand der anderen Liniengruppen 111 unterscheidet, damit erste Kameras 21 unterschiedlicher Kamerasysteme 20 und zweite Kameras 22 mit unterschiedlichem Auflösungsvermögen kalibriert werden können. Die Maßverkörperung 12 weist Linien mit einem gleichen Linienabstand auf. Der interessierende Bereich 122 enthält das Muster 11 und die Maßverkörperung 12. Die erste Fläche Fₘ, die von der ersten Kamera 21 abgebildet werden kann, kann gleichzeitig die zweite Fläche Fₙ sein, die von der mindestens einen zweiten Kamera 22 abgebildet werden kann.

Die Linien des Musters 11 bzw. der Liniengruppen 111 verlaufen im Wesentlichen senkrecht zu den Linien der Maßverkörperung 12. Für das erfindungsgemäße Verfahren zur Kalibrierung des Kamerasystems ist dies notwendig, da die Maßverkörperung 12 zur Zuordnung in dem gemeinsamen übergeordneten Koordinatensystem dient und das Muster 11 zur Bestimmung der Fokusqualitätsfunktion.

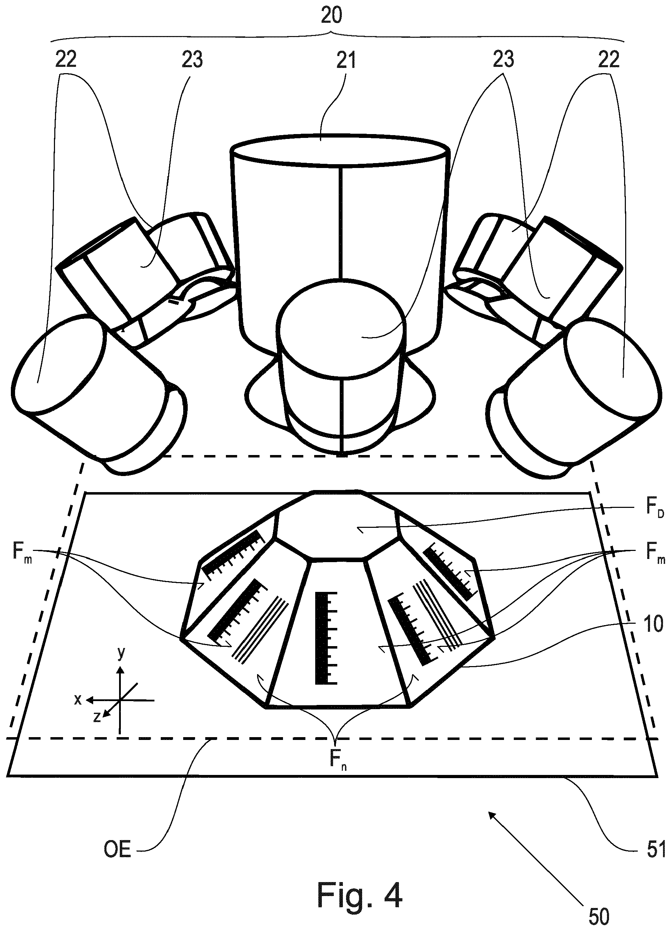

**Fig. 4** zeigt eine dritte Ausführung der Anordnung von Kamerasystem 20 und Kalibrierkörper 10. Der Kalibrierkörper 10 ist als achtseitiger Pyramidenstumpf ausgeführt und auf einem Messtisch 50 angeordnet. Der Mittelpunkt des Kalibrierkörpers 10 befindet sich auf einer optischen Achse O₁ der ersten Kamera 21. Auf den Seitenflächen des Pyramidenstumpfs bzw. Kalibrierkörpers 10 sind Maßverkörperungen 12 fest aufgebracht. Die Maßverkörperungen 12 dienen zur Ermittlung der räumlichen Beziehung zwischen der ersten Kamera 21 und den zweiten Kameras 22 und durch die Maßverkörperung 12 sind Fokuslagen und Fokusqualitätsfunktionen der ersten Kamera 21 und der zweiten Kameras 22 in einem übergeordneten Koordinatensystem einander zuordenbar. Auf jeder zweiten Seitenfläche ist ein Muster 11 fest aufgebracht. Auf die Seitenflächen, auf die kein Muster 11 fest aufgebracht ist, wird das Muster 11 durch Belichtung mittels Projektoren 23 projiziert (nicht dargestellt). Die Muster 11 weisen bei der dargestellten Ausführung fünf Liniengruppen 111 auf, wobei die Liniengruppen 11 jeweils den gleichen Linienabstand aufweisen, der sich von dem Linienabstand anderer Liniengruppen 111 unterscheidet. Die Liniengruppen 111 dienen auch hier der Ermittlung der Fokuslagen der ersten Kamera 21 und der zweiten Kameras 22. Die vier zweiten Kameras 22 die und die vier Projektoren 23 (nur drei davon sind dargestellt) sind alternierend auf einem Kreis um die erste Kamera 21 herum angeordnet. Jeder zweiten Fläche Fₙ des Kalibrierkörpers 10 ist eine zweite Kamera 22 zugeordnet und jede zweite Kamera 22 ist auf denselben Punkt P auf der optischen Achse O₁ der ersten Kamera 21 ausgerichtet. Jede zweite Kamera 22 ist dazu ausgebildet, die zweite Fläche Fₙ abzubilden. Alle optischen Achsen O₂ der zweiten Kameras 22 schließen denselben ersten Winkel α mit der optischen Achse O₁ der ersten Kamera 21 ein.

Die nicht dargestellte Auswerte- und Speichereinheit 30 ist mit der ersten Kamera 21 und den zweiten Kameras 22 verbunden und dazu ausgebildet, die Fokuslagen der ersten Kamera 21 und der zweiten Kameras 22 auf Basis von mindestens einer Abbildung der ersten Kamera 21 und der zweiten Kameras 22 zu ermitteln und zu kalibrieren.

Die erste Kamera 21 ist bei der in Fig. 4 gezeigten dritten Ausführung als telezentrische Kamera und dazu ausgebildet, die ersten Flächen Fₘ abzubilden. Die erste Kamera 21 ist bei der gezeigten oberhalb einer Deckfläche F_{D} des Kalibrierkörpers 10 angeordnet und die Fokusebene der ersten Kamera 21 liegt bei der gezeigten Ausführung unterhalb der Deckfläche F_{D} und oberhalb einer Grundfläche des Pyramidenstumpfs bzw. Kalibrierkörpers 10. Die optische Achse O₁ der ersten Kamera 21 ist senkrecht zur Tischplatte 51 des Messtischs 50 ausgerichtet. Ein Sichtfeld der ersten Kamera 21 ist vorteilhaft ausreichend groß, um alle Seitenflächen des Kalibrierkörpers 10 abbilden zu können.

Um die erste Kamera 21 und die zweiten Kameras 22 zu kalibrieren, wird mindestens eine Abbildung von der ersten Fläche Fₘ mit der ersten Kamera 21 aufgenommen und mindestens eine Abbildung von der jeder zweiten Fläche Fₙ mit je einer zweiten Kamera 22 aufgenommen. Anschließend wird der interessierende Bereich 122 für die mindestens eine Abbildung der ersten Fläche Fₘ und der interessierende Bereich 122 für die mindestens eine Abbildung jeder zweiten Fläche Fₙ mittels der Auswerte- und Speichereinheit 30 bestimmt. In jedem interessierenden Bereich 122 ist mindestens ein Muster 11 und mindestens eine Maßverkörperung 12 enthalten. Durch die Auswerte- und Speichereinheit 30 wird eine Fokusqualitätsfunktion jeweils für die erste Kamera 21 und die zweiten Kameras 22 ermittelt. Die Fokusqualitätsfunktion wird aus Mittelwerten und Standardabweichungen von Grauwerten aus dem jeweiligen interessierenden Bereich 122 ermittelt. In der Folge wird ein Extremwert, also ein Minimum oder ein Maximum, der Fokusqualitätsfunktion jeweils für die erste Kamera 21 und jede zweite Kamera 22 mittels der Auswerte- und Speichereinheit 30 ermittelt. Die erste Kamera 21 und die zweiten Kameras 22 werden kalibriert, wobei ein Bezug zwischen den Fokusqualitätsfunktionen und den Fokuslagen sowie eine räumliche Beziehung zwischen der ersten Kamera 21 und jeder mindestens einen zweiten Kamera 22 des Kamerasystems 20 jeweils durch eine Maßverkörperung 12 hergestellt wird.

### Bezugszeichenliste

- 10: Kalibrierkörper
- 11: Muster
- 111: Liniengruppe
- 12: Maßverkörperung
- 122: interessierender Bereich (Region of Interest)

- 20: Kamerasystem
- 21: erste Kamera
- 22: zweite Kamera
- 23: Projektor

- 30: Auswerte- und Speichereinheit

- 40: Aktuator

- 50: Messtisch
- 51: Tischplatte

- F: Fläche des Kalibrierkörpers
- F_{D}: Deckfläche
- Fₘ: Fläche
- Fₙ: Fläche

- O₁: Optische Achse der ersten Kamera
- O₂: Optische Achse einer zweiten Kamera

- OE: Objektebene

- P: Punkt

- α: erster Winkel
- θ: zweiter Winkel

## Patentansprüche

1. Anordnung zum Kalibrieren eines Kamerasystems (20), umfassend:
- einen Kalibrierkörper (10), der ein achsensymmetrischer Polyeder mit einer Grundfläche ist, dessen Mittelpunkt sich auf einer optischen Achse (O₁) einer ersten Kamera (21) befindet und bei dem auf mindestens einer Fläche ein Muster (11) aufgebracht ist, das mindestens eine Liniengruppe (111) zur Ermittlung der Fokuslagen von Kameras (21, 22) des Kamerasystems (20) aufweist, wobei das Kamerasystem (20) umfasst:
- die erste Kamera (21), die entlang der optischen Achse (O₁) der ersten Kamera (21) ausgerichtet und dazu ausgebildet ist, mindestens eine erste Fläche (Fₘ) des Kalibrierkörpers (10) abzubilden,
- mindestens eine zweite Kamera (22), wobei jede zweite Kamera (22) einer zweiten Fläche (Fₙ) des Kalibrierkörpers (10) zugeordnet und dazu ausgebildet ist, die ihr zugeordnete zweite Fläche (Fₙ) abzubilden, und
- eine Auswerte- und Speichereinheit (30), die mit der ersten Kamera (21) und der mindestens einen zweiten Kamera (22) verbunden und dazu ausgebildet ist, die Fokuslagen der ersten Kamera (21) und der mindestens einen zweiten Kamera (22) auf Basis von mindestens einer Abbildung der ersten Kamera (21) und der mindestens einen zweiten Kamera (22) zu ermitteln und zu kalibrieren, **dadurch gekennzeichnet, dass**
- die erste Kamera (21) und die mindestens eine zweite Kamera (22) auf denselben Punkt (P) der optischen Achse (O₁) der ersten Kamera (21) ausgerichtet sind,
- die erste Kamera (21) als telezentrische Kamera ausgebildet ist,
- eine optische Achse (O₂) der mindestens einen zweiten Kamera (22) einen ersten Winkel (α) mit der optischen Achse (O₁) der ersten Kamera (21) einschließt und
- auf jeder ersten Fläche (Fₘ) und jeder zweiten Fläche (Fₙ) des Kalibrierkörpers (10) das Muster (11) und eine Maßverkörperung (12) aufgebracht sind, wobei die Maßverkörperung (12) zur Ermittlung einer räumlichen Beziehung zwischen der ersten Kamera (21) und der mindestens einen zweiten Kamera (22) ausgebildet ist und durch die Maßverkörperung (12) Fokuslagen und Fokusqualitätsfunktionen der ersten Kamera (21) und der mindestens einen zweiten Kamera (22) in einem übergeordneten gemeinsamen Koordinatensystem einander zuordenbar sind.

2. Anordnung nach Anspruch 1, **dadurch gekennzeichnet, dass** die Maßverkörperung (12) fest auf jeder ersten Fläche (Fₘ) und jeder zweiten Fläche (Fₙ) aufgebracht ist und das Muster (11) auf jeder ersten Fläche (Fₘ) und jeder zweiten Fläche (Fₙ) entweder fest oder durch Belichtung mittels mindestens je eines Projektors (23) auf jeder ersten Fläche (Fₘ) und jeder zweiten Fläche (Fₙ) aufgebracht ist.

3. Anordnung nach Anspruch 1 oder 2, **dadurch gekennzeichnet, dass** mindestens eine zweite Kamera (22) als entozentrische Kamera ausgebildet ist.

4. Anordnung nach einem der Ansprüche 1 bis 3, **dadurch gekennzeichnet, dass** der Kalibrierkörper (10) sich in einer Objektebene (OE) befindet, in der ein zu prüfendes und/oder zu vermessendes Objekt platziert werden kann, und die Form einer Platte aufweist.

5. Anordnung nach einem der Ansprüche 1 bis 3, **dadurch gekennzeichnet, dass** der Kalibrierkörper (10) sich in einer Objektebene (OE) befindet, in der ein zu prüfendes und/oder zu vermessendes Objekt platziert werden kann, und die Form einer n-seitigen Pyramide oder eines n-seitigen Pyramidenstumpfs aufweist, wobei jede erste Fläche (Fₘ) und jede zweite Fläche (Fₙ) eine Seitenfläche der Pyramide oder des Pyramidenstumpfs ist.

6. Anordnung nach einem der vorhergehenden Ansprüche, **dadurch gekennzeichnet, dass** ein Aktuator (40) vorhanden ist, der mit dem Kalibrierkörper (10) gekoppelt ist, sodass der Kalibrierkörper (10) um einen zweiten Winkel (θ) um die optische Achse (O₁) der ersten Kamera (21) verdrehbar ist.

7. Anordnung nach einem der Ansprüche 1 bis 6, **dadurch gekennzeichnet, dass** der Kalibrierkörper (10) auf einem Messtisch (50) angeordnet ist und die optische Achse (O₁) der ersten Kamera (21) senkrecht zu einer Tischplatte (51) des Messtischs (50) ausgerichtet ist.

8. Kalibrierkörper (10) zur Kalibrierung eines Kamerasystems (20), wobei der Kalibrierkörper (10) ein achsensymmetrischer Polyeder mit einer Grundfläche ist, bei dem auf mindestens einer Fläche ein Muster (11), das mindestens eine Liniengruppe (111) zur Ermittlung der Fokuslagen von einer ersten Kamera (21) und mindestens einer zweiten Kamera (22) des Kamerasystems (20) aufweist, und eine Maßverkörperung (12) zur Ermittlung einer räumlichen Beziehung zwischen der ersten Kamera (21) und der mindestens einen zweiten Kamera (22) und zur Zuordnung von Fokuslagen und Fokusqualitätsfunktionen der ersten Kamera (21) und der mindestens einen zweiten Kamera (22) in einem übergeordneten gemeinsamen Koordinatensystem, aufgebracht sind.

9. Kalibrierkörper (10) nach Anspruch 8, **dadurch gekennzeichnet, dass** das Muster (11) genau eine Liniengruppe (111) aufweist und die Liniengruppe (111) ungleiche Linienabstände aufweist.

10. Kalibrierkörper (10) nach Anspruch 8, **dadurch gekennzeichnet, dass** das Muster (11) mindestens zwei Liniengruppen (111) und jede der Liniengruppen (111)jeweils einen gleichen Linienabstand aufweist, der sich von dem Linienabstand der anderen Liniengruppen (111) unterscheidet.

11. Kalibrierkörper (10) nach einem der Ansprüche 8 bis 10, **dadurch gekennzeichnet, dass** der Kalibrierkörper (10) die Form einer n-seitigen Pyramide oder eines n-seitigen Pyramidenstumpfs aufweist.

12. Verfahren zur Kalibrierung eines Kamerasystems (20), umfassend folgende Schritte:
- Aufnehmen mindestens einer Abbildung von mindestens einer ersten Fläche (Fₘ) eines Kalibrierkörpers (10) mit einer ersten Kamera (21),
- Aufnehmen mindestens einer Abbildung von mindestens einer zweiten Fläche (Fₙ) des Kalibrierkörpers (10) mittels mindestens einer zweiten Kamera (22),
- Bestimmen eines interessierenden Bereichs (122) mittels einer Auswerte- und Speichereinheit (30) jeweils für die mindestens eine Abbildung der mindestens einen ersten Fläche (Fₘ) und für die mindestens eine Abbildung der mindestens einen zweiten Fläche (Fₙ), wobei jeder interessierende Bereich (122) mindestens ein Muster (11) und mindestens eine Maßverkörperung (12) enthält,
- Ermitteln einer Fokusqualitätsfunktion mit der Auswerte- und Speichereinheit (30) für jeweils die erste Kamera (21) und die mindestens eine zweite Kamera (22), wobei die Fokusqualitätsfunktion aus Mittelwerten und Standardabweichungen von Grauwerten aus dem jeweiligen interessierenden Bereich (122) ermittelt wird,
- Ermitteln eines Extremwertes der Fokusqualitätsfunktionen für jeweils die erste Kamera (21) und die mindestens eine zweite Kamera (22) mit der Auswerte- und Speichereinheit (30),
- Kalibrieren der ersten Kamera (21) und der mindestens einen zweiten Kamera (22), wobei ein Bezug zwischen den Fokusqualitätsfunktionen und den Fokuslagen sowie eine räumliche Beziehung zwischen der ersten Kamera (21) und der mindestens einen zweiten Kamera (22) jeweils durch eine Maßverkörperung (12) hergestellt wird.

13. Verfahren nach Anspruch 12, **dadurch gekennzeichnet, dass** der interessierende Bereich (122) in mehrere Teilbereiche unterteilt und für jeden der Teilbereiche eine Fokusqualitätsfunktion für jeweils die erste Kamera (21) und die mindestens eine zweite Kamera (22) ermittelt wird.

14. Verfahren nach Anspruch 12 oder 13, **dadurch gekennzeichnet, dass** jede ermittelte Fokusqualitätsfunktion mittels entsprechender Filter korrigiert wird, um Störungen, wie beispielsweise Abbildungs- oder Abtastungsfehler, zu entfernen.

15. Verfahren nach einem der Ansprüche 12 bis 14, **dadurch gekennzeichnet, dass** mit der ersten Kamera (21) und/oder der mindestens einen zweiten Kamera (22) jeweils mehrere Abbildungen aufgenommen werden und der Kalibrierkörper (10) nach jeder Aufnahme um einen zweiten Winkel (θ) um die optische Achse (O₁) der ersten Kamera (21), mittels eines Aktuators (40) verdreht wird.
